# EUROPEAN PATENT APPLICATION

(11) **EP 4 425 676 A1**
(43) Date of publication of application: **04.09.2024**
(21) Application number: 22927926.0
(22) Date of filing: 28.02.2022
(51) Int. Cl.: H01M 50/358

(54) **BATTERY, ELECTRICAL APPARATUS, AND METHOD AND DEVICE FOR MANUFACTURING BATTERY**

(71) Applicant: Contemporary Amperex Technology Co., Limited, Ningde, Fujian 352100 (CN)
(72) Inventor: HE, Runyong, Ningde, Fujian 352100 (CN); QIN, Feng, Ningde, Fujian 352100 (CN); WANG, Peng, Ningde, Fujian 352100 (CN)
(74) Representative: Herrmann, Uwe
(86) International application number: PCT/CN2022/078493
(87) International publication number: WO 2023/159645

(57) **Abstract**

The present application provides a battery, a power consumption apparatus, and a battery manufacturing method and device. The battery includes: a box body, including a side wall for forming an accommodating cavity by enclosing, where the side wall has an exhaust port; a battery cell group, disposed inside the accommodating cavity and including a plurality of battery cells, where the plurality of battery cells are stacked; and an end plate, disposed inside the accommodating cavity and located between the battery cell group and the side wall, where the end plate covers the exhaust port, the end plate is provided with a guide passage, and the guide passage is used for connecting the accommodating cavity and the exhaust port. In the technical solution of the present application, the guide passage is disposed on the end plate to guide gas generated in the battery, and the gas generated in the battery is enabled to be quickly and timely discharged out of the box body along the guide passage, thereby ensuring exhaust smoothness of the battery and improving safety of the battery. Meanwhile, the guide passage is disposed on the end plate to prevent the guide passage from occupying a space inside the box body alone, which is conducive to ensuring space utilization in the box body and increasing an energy density of the battery.

## Description

### Technical Field

The present application relates to the field of battery technology, and particularly to a battery, a power consumption apparatus, and a battery manufacturing method and device.

### Background Art

Energy conservation and emission reduction are the key to sustainable development of the automotive industry. Electric vehicles have become an important part of the sustainable development of the automotive industry due to their advantages of energy conservation and environmental protection. For electric vehicles, the battery technology is an important factor for their development.

Improvement on energy densities of batteries is currently an important direction for the development of the battery industry. An energy density of a battery may be effectively improved by improving space utilization in a box body of the battery. However, after the space utilization of the box body of the existing battery is improved, exhaust smoothness of the battery may be affected, thereby affecting battery safety.

### Summary

The present application provides a battery, a power consumption apparatus, a battery manufacturing method and device, by which exhaust smoothness of a battery can be effectively improved and safety performance of the battery can be improved.

In a first aspect, the present application provides a battery, including: a box body, including a side wall for forming an accommodating cavity by enclosing, where the side wall has an exhaust port; a battery cell group, disposed inside the accommodating cavity and including a plurality of battery cells, where the plurality of battery cells are stacked; and an end plate, disposed inside the accommodating cavity and located between the battery cell group and the side wall, where the end plate covers the exhaust port, the end plate is provided with a guide passage, and the guide passage is used for communicating the accommodating cavity with the exhaust port.

In the foregoing technical solution, the side wall of the box body of the battery is provided with the exhaust port, the end plate is provided with the guide passage, and the guide passage connects the accommodating cavity and the exhaust port of the box body, where the guide passage can guide gas generated in the battery, and the gas generated in the battery is enabled to arrive at the exhaust port of the box body along the guide passage in a quickly and timely manner and is finally discharged out of the box body from the exhaust port, thereby ensuring exhaust smoothness of the battery and improving safety of the battery. Meanwhile, the guide passage and the exhaust port can effectively avoid retention and cross flowing of the gas inside the box body, thereby reducing the risk of damage of components inside the battery by the high-temperature and high-pressure gas and protecting normal use performance of the battery.

The guide passage is disposed on the end plate, and the end plate can directly cover the exhaust port of the box body. Such a structure prevents the guide passage from occupying a space inside the box body alone, avoids affecting a structural density inside the box body of the battery, and is conducive to ensuring space utilization in the box body, thereby ensuring an overall energy density of the battery.

Moreover, in practical use, especially in the automotive industry, batteries and users exist in the same space, and high-temperature and high-pressure gas generated by the batteries may threaten personal safety of users. In the present application, a directional spray path is formed in the battery through the exhaust port and the guide passage to guide directional spray of gas out of the battery, so that the exhaust direction of the battery is controllable and use safety of the battery is further improved.

In some embodiments, the box body further includes a top wall, the side wall is disposed at a periphery of the top wall, the battery cell group is located below the top wall, there is an exhaust gap between the top wall and the battery cell group, and the guide passage is used for communicating the exhaust gap with the exhaust port.

In the foregoing technical solution, the exhaust gap is disposed between the battery cell group and the top wall of the box body, and the exhaust gap can further guide the gas discharged by the battery cells, so that the gas discharged by the battery cells is discharged out of the box body of the battery via the exhaust gap, the guide passage, and the exhaust port, free escape of the gas inside the box body is avoided, and the risk of safety hazards caused by gas retention inside the box body is further reduced.

In some embodiments, in a thickness direction of the end plate, the guide passage is directly opposite to the exhaust port or the guide passage and a projection of the exhaust port overlap at least partially.

In the foregoing technical solution, the guide passage is directly opposite to the exhaust port or the projections overlap at least partially to ensure a gas passing surface between the guide passage and the exhaust port, so that the gas passing through the guide passage can quickly and timely enter the exhaust port and be discharged via the exhaust port.

In some embodiments, the guide passage includes a vertical passage and a horizontal passage, an upper end of the vertical passage is in communication with the accommodating cavity, one end of the horizontal passage in the thickness direction is in communication with the vertical passage, and the other end is in communication with the exhaust port.

In the foregoing technical solution, the guide passage includes the vertical passage and the horizontal passage in communication with each other, the upper end of the vertical passage is in communication with the accommodating cavity, and the horizontal passage connects the vertical passage and the exhaust port. The communication structure of the vertical passage and the horizontal passage converts the direction of the guide passage. The exhaust port is disposed on the side wall of the box body, the vertical passage guides the gas into the guide passage, and then the gas flows through the horizontal passage towards the exhaust port disposed on the side wall of the box body, so that the gas can be smoothly discharged out of the battery along the horizontal passage and the exhaust port.

In some embodiments, the vertical passage does not penetrate the end plate in a vertical direction.

In the foregoing technical solution, the vertical passage does not penetrate the end plate. On the one hand, the end plate can block and limit vertical flowing of the gas, to prevent retention of the high-temperature and high-pressure gas inside the box body that continuously flows down the vertical passage to the bottom wall of the box body from affecting a directional spray effect of the gas in the battery. On the other hand, the design of the vertical passage that does not fully penetrate the end plate in the height direction can effectively reduce diffusion of the high-temperature gas and avoid direct transfer of the gas to the bottom of the box body and leakage to the battery cells near the end plate.

In some embodiments, the end plate includes: an end plate body having a first surface facing the battery cell group and a second surface facing away from the battery cell group, where the first surface abuts against the battery cell group; and a plurality of first reinforcing ribs formed on the second surface and abutting against the side wall, where the plurality of first reinforcing ribs are spaced in the vertical direction, and where the plurality of first reinforcing ribs include a top reinforcing rib, middle reinforcing ribs, and a bottom reinforcing rib, the vertical passage penetrates at least the top reinforcing rib, and the horizontal passage is formed between the two adjacent first reinforcing ribs.

In the foregoing technical solution, the end plate includes the end plate body and the reinforcing ribs formed on the end plate body, where the reinforcing ribs effectively improve the structural strength of the end plate and improve deformation resistance of the end plate. Meanwhile, compared with increasing an overall thickness of the end plate to improve the strength of the end plate, the reinforcing ribs ensure the structural strength of the end plate and reduce overall weight and material loss of the end plate, thereby reducing weight and material costs of the battery. The guide passage is disposed on the reinforcing ribs, that is, the guide passage may be directly formed on the first reinforcing ribs by penetrating some first reinforcing ribs in the vertical direction according to the position of the exhaust port on the side wall, so the implementation is easy.

In some embodiments, the top reinforcing rib is provided with a first opening, the middle reinforcing rib is provided with a second opening, the first opening is in communication with the second opening to form the vertical passage, and an area of the first opening is greater than that of the second opening.

In the foregoing technical solution, the top reinforcing rib is provided with the larger first opening, and the first opening is in communication with the second opening to form the vertical passage, where the first opening can collect gas and guide the gas quickly into the vertical passage.

In some embodiments, the top reinforcing rib is further provided with a clamping portion for mating with a clamping mechanism for the end plate.

In the foregoing technical solution, the top reinforcing rib is provided with the clamping portion, which enables the clamping mechanism to act on the clamping portion and clamp the end plate, thereby facilitating assembly of the end plate.

In some embodiments, the end plate further includes: a plurality of second reinforcing ribs formed on the second surface and abutting against the side wall, where the plurality of second reinforcing ribs intersect the plurality of first reinforcing ribs, and each second reinforcing rib extends in the vertical direction.

In the foregoing technical solution, the end plate includes the second reinforcing ribs intersecting the first reinforcing ribs, and the first reinforcing ribs and the second reinforcing ribs form a mesh structure, which further improves the structural strength of the end plate.

In some embodiments, the vertical passage is located between two adjacent second reinforcing ribs.

In the foregoing technical solution, the vertical passage is disposed between the two adjacent second reinforcing ribs, and the second reinforcing ribs intercept and limit horizontal flowing of the gas along the first reinforcing ribs, so as to further improve the gas guiding effect of the guide passage.

In some embodiments, the battery further includes: a pressure relief mechanism disposed on the side wall, where one end of the pressure relief mechanism is in communication with the exhaust port, and the pressure relief mechanism is configured to release internal pressure when the internal pressure of the battery reaches a threshold.

In the foregoing technical solution, the battery is provided with the pressure relief mechanism in communication with the exhaust port, where the pressure relief mechanism effectively controls discharge frequency of the battery. When the pressure relief mechanism is in a non-brake state, impurities such as dust and water stains can be prevented from entering the box body via the exhaust port.

In a second aspect, the present application provides a power consumption apparatus, including the battery described in any of the above solutions, where the battery is used for providing electrical energy.

In a third aspect, the present application provides a battery manufacturing method, including: providing a box body, where the box body includes a side wall for forming an accommodating cavity by enclosing, and the side wall has an exhaust port; providing a battery cell group, where the battery cell group includes a plurality of battery cells, and the plurality of battery cells are stacked; providing an end plate, where the end plate is provided with a guide passage; and disposing the battery cell group and the end plate inside the accommodating cavity, enabling the end plate to be located between the battery cell group and the side wall and to cover the exhaust port, and communicating the guide passage with the accommodating cavity and the exhaust port.

In a fourth aspect, the present application provides a provision module, configured to provide a box body, a battery cell group, and an end plate, where the box body includes a side wall for forming an accommodating cavity by enclosing, the side wall has an exhaust port, the battery cell group includes a plurality of battery cells, the plurality of battery cells are stacked, and the end plate is provided with a guide passage; and an assembly module, configured to dispose the battery cell group and the end plate inside the accommodating cavity, enable the end plate to be located between the battery cell group and the side wall and to cover the exhaust port, and communicate the guide passage with the accommodating cavity and the exhaust port.

### Brief Description of Drawings

In order to illustrate the technical solutions in the embodiments of the present application more clearly, brief description will be made below to the drawings required in the embodiments of the present application. Apparently, the drawings described below are some embodiments of the present application only, and other drawings could be obtained based on these drawings by those of ordinary skill in the art without creative efforts.
FIG. 1 is a schematic structural diagram of a vehicle according to some embodiments of the present application;
FIG. 2 is an exploded view of a battery from a first perspective according to some embodiments of the present application;
FIG. 3 is an exploded view of the battery from a second perspective according to some embodiments of the present application;
FIG. 4 is a partial front cross-sectional view of the battery according to some embodiments of the present application;
FIG. 5 is a top view shown in FIG. 4;
FIG. 6 is an axonometric view of an end plate from a first perspective according to some embodiments of the present application;
FIG. 7 is an axonometric view of the end plate from a second perspective according to some embodiments of the present application;
FIG. 8 is a partially enlarged view of part A shown in FIG. 2;
FIG. 9 is a partially enlarged view of part B shown in FIG. 3;
FIG. 10 is a schematic diagram of a state that a sampling unit penetrates the end plate according to some embodiments of the present application;
FIG. 11 is a schematic diagram of a mating structure that the sampling unit penetrates the end plate as shown in FIG. 10;
FIG. 12 is a schematic structural diagram of the end plate according to some embodiments of the present application;
FIG. 13 is a schematic flowchart of a battery manufacturing method according to some embodiments of the present application; and
FIG. 14 is a schematic block diagram of a battery manufacturing device according to some embodiments of the present application.

The drawings are not drawn to actual scale.

Reference signs: 1000 - vehicle; 100 - battery; 10 - battery cell group; 11 - battery cell; 20 - box body; 21 - side wall; 211 - accommodating cavity; 2111 - exhaust gap; 212 - exhaust port; 22 - top wall; 23 - bottom wall; 231 - through hole; 30 - end plate; 31 - end plate body; 311 - first surface; 312 - second surface; 32 - first reinforcing rib; 321 - top reinforcing rib; 3211 - first opening; 322 - middle reinforcing rib; 3221 - second opening; 323 - bottom reinforcing rib; 324 - avoidance port; 33 - second reinforcing rib; 34 - passage; 35 - guide passage; 351 - vertical passage; 352 - horizontal passage; 40 - clamping portion; 50 - pressure relief mechanism; 60 - electrical energy lead-out member; 61 - first segment; 62 - second segment; 63 - third segment; 64 - bent angle; 70 - sampling unit; 71 - sampling unit body; 72 - occluding portion; 80 - high-voltage distribution box; 90 - output electrode; 200 - controller; 300 - motor; 2000 - manufacturing device; 2100 - first provision apparatus; 2200 - second provision apparatus; 2300 - third provision apparatus; 2400 - first assembly apparatus; 2500 - second assembly apparatus.

### Detailed Description of Embodiments

In order to make the objectives, technical solutions and advantages of the embodiments of the present application clearer, the technical solutions in the embodiments of the present application will be described clearly and completely below in conjunction with the accompanying drawings in the embodiments of the present application. Apparently, the described embodiments are part of the embodiments of the present application, not all of them. Components in the embodiments of the present application, typically described and shown in the drawings, may be arranged and designed in various different configurations.

Therefore, detailed descriptions of the embodiments of the present application provided in the drawings below are not intended to limit the scope of protection of the present application, but only to represent the selected embodiments of the present application. All other embodiments obtained by those of ordinary skill in the art based on the embodiments of the present application without creative efforts shall fall within the scope of protection of the present application.

The following describes the embodiments of the technical solutions of the present application with reference to the drawings. The following embodiments are only used to illustrate the technical solutions of the present application, and therefore are only examples and cannot be used to limit the scope of protection of the present application.

Unless otherwise defined, all technological and scientific terms used herein have the same meanings as those commonly understood by those skilled in the art to which the present application belongs. The terms used herein are merely for the purpose of describing specific embodiments, but are not intended to limit the present application. The terms "include" and "have" and any variations thereof in the specification and claims of the present application as well as the brief description of the drawings described above are intended to cover non-exclusive inclusion.

In the description of the embodiments of the present application, the terms "first", "second", and the like are only used to distinguish different objects and cannot be understood as indicating or implying relative importance or implying the quantity, specific order, or primary and secondary relation of the indicated technical features. In the description of the embodiments of the present application, "a plurality of" means two or more, unless otherwise specified.

The phrase "embodiment" referred to herein means that specific features, structures, or characteristics described in conjunction with the embodiment may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

In the description of the embodiments of the present application, the term "a plurality of means two (inclusive) or more.

In the description of the embodiments of the present application, an orientation or positional relationship indicated by the technical term "center", "longitudinal", "transverse", "length", "width", "thickness", "upper", "lower", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in the drawings, and is merely for ease of describing the present application and simplifying the description, but does not indicate or imply that an apparatus or an element referred to must have a specific orientation or be constructed and operated in a specific orientation, and therefore cannot be understood as a limitation on the embodiments of the present application.

In the description of the embodiments of the present application, unless otherwise explicitly specified and defined, the technical terms "set", "mounted", "connected", "connection", "fixed", and the like should be understood broadly. For example, the term "connection" may be a fixed connection, a detachable connection, an integration, a mechanical connection, an electrical connection, a direct connection, an indirect connection through a medium, or an internal communication of two elements, or an interaction between two elements. Those of ordinary skill in the art may appreciate the specific meanings of the foregoing terms in the embodiments of the present application to specific circumstances.

In the embodiments of the present application, the same reference numerals represent the same components, and for simplicity, detailed descriptions of the same components are omitted in different embodiments. It should be understood that dimensions such as thickness, length and width of various components and dimensions such as overall thickness, length and width of integrated apparatuses in the embodiments of the present application shown in the drawings are merely illustrative examples and should not constitute any limitations on the present application.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to the way of packaging: cylindrical battery cells, square battery cells, and soft package battery cells, which are not limited in the embodiments of the present application.

The battery mentioned in the embodiments of the present application refers to a single physical module that includes one or more battery cells to provide a higher voltage and capacity. For example, the battery mentioned in the present application may include a battery module or a battery pack. The battery may include a box body for packaging one or more battery cells. The box body may prevent liquid or other foreign matters from affecting the charging or discharging of the battery cells.

The battery cell includes an electrode assembly and an electrolyte, and the electrode assembly is composed of a positive electrode sheet, a negative electrode sheet and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and the positive electrode current collector not coated with the positive electrode active material layer protrudes from the positive electrode current collector coated with the positive electrode active material layer and is used as a positive tab. In an example of a lithium-ion battery, a material of the positive electrode current collector may be aluminum, and a positive electrode active material may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer and is used as a negative tab. A material of the negative electrode current collector may be copper, and a negative electrode active material may be carbon, silicon, or the like. In order to ensure that no fusing occurs when a large current passes through, there are a plurality of positive tabs which are stacked together and a plurality of negative tabs which are stacked together. A material of the separator may be polypropylene (PP), polyethylene (PE), or the like. In addition, the electrode assembly may be of a winding structure or a laminated structure, and the embodiments of the present application are not limited thereto.

Improvement on energy densities of batteries is currently an important direction for the development of the battery industry, but the inventor discovered that, after an energy density of an existing battery is improved, the battery has a problem of impeded exhaust, which seriously affects battery safety.

After research, simulation, and analysis on reasons, it was found that a purpose of improving an energy density of a battery is achieved at present by improving space utilization in a box body of the battery. However, after the space utilization in the box body of the battery, the space between a battery module and the box body is greatly reduced, and an end plate of the battery module will be close to a wall of the box body to cover an exhaust port on the wall of the box body, so that an effective exhaust passage cannot be formed inside the box body, exhaust smoothness of the battery is affected, and gas discharged by a battery cell cannot be discharged from the box body in a timely and smooth manner.

Based on the above considerations, in order to ensure an energy density of a battery and effectively improve exhaust smoothness of the battery, the applicant provides a battery, which includes a box body, where the box body includes a side wall for forming an accommodating cavity by enclosing, and the side wall has an exhaust port; a battery cell group disposed inside the accommodating cavity and including a plurality of battery cells that are stacked; and an end plate, disposed inside the accommodating cavity and located between the battery cell group and the side wall, where the end plate covers the exhaust port, the end plate is provided with a guide passage, and the guide passage is used for communicating the accommodating cavity with the exhaust port.

In the technical solution of the present application, the side wall of the box body of the battery is provided with the exhaust port, the end plate is provided with the guide passage, and the guide passage connects the accommodating cavity and the exhaust port of the box body, where the guide passage can guide gas generated in the battery, and the gas generated in the battery is enabled to arrive at the exhaust port of the box body along the guide passage in a quickly and timely manner and is finally discharged out of the box body from the exhaust port, thereby ensuring exhaust smoothness of the battery and improving safety of the battery. Meanwhile, the guide passage and the exhaust port can effectively avoid retention and cross flowing of the gas inside the box body, thereby reducing the risk of damage of components inside the battery by high-temperature and high-pressure gas, and protecting normal use performance of the battery. The guide passage is disposed on the end plate, and the end plate can directly cover the exhaust port of the box body. Such a structure prevents the guide passage from occupying a space inside the box body alone, avoids affecting a structural density inside the box body of the battery, and is conducive to ensuring space utilization in the box body, thereby ensuring an overall energy density of the battery.

Moreover, in practical use, especially in the automotive industry, batteries and users exist in the same space, and high-temperature and high-pressure gas generated by the batteries may threaten personal safety of users. In the present application, a directional spray path is formed in the battery through the exhaust port and the guide passage to guide directional spray of gas out of the battery, so that the exhaust direction of the battery is controllable and use safety of the battery is improved accordingly.

The battery disclosed in the embodiments of the present application may be used, but is not limited to, in a power consumption device such as a vehicle, a ship, or an aircraft. The battery disclosed in the present application may be used to form a power system of the power consumption device. In this case, a service life of the battery can be effectively prolonged and use performance of the battery can be effectively improved.

An embodiment of the present application provides a power consumption apparatus using a battery as a power supply. The power consumption apparatus may be, but is not limited to, a mobile phone, a tablet computer, a notebook computer, an electric toy, an electric tool, a scooter, an electric vehicle, a ship, a spacecraft, or the like. The electric toy may include fixed or mobile electric toys, such as game consoles, electric vehicle toys, electric ship toys and electric aircraft toys, and the spacecraft may include airplanes, rockets, space shuttles, spaceships, and the like.

The battery described in the embodiments of the present application is not only applicable to the power consumption apparatuses described above, but may also be applicable to all power consumption apparatuses using batteries. However, for the sake of simplicity, the following embodiments are described by an example of a vehicle as a power consumption apparatus in an embodiment of the present application.

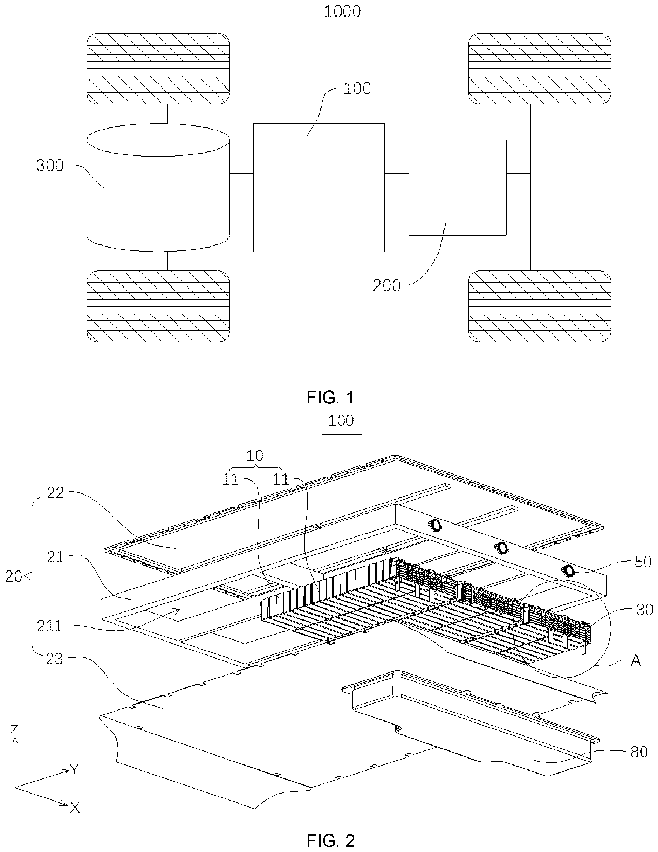

Referring to FIG. 1, FIG. 1 is a schematic structural diagram of a vehicle 1000 according to some embodiments of the present application. The vehicle 1000 may be a fuel-powered vehicle, a gas-powered vehicle or a new energy vehicle, and the new energy vehicle may be a battery electric vehicle, a hybrid vehicle, an extended-range vehicle, or the like. A battery 100 is provided inside the vehicle 1000. The battery 100 may be disposed at the bottom, head or tail of the vehicle 1000. The battery 100 may be used for supplying power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for the working power demand of the vehicle 1000 during startup, navigation and running.

In other embodiments, the battery 100 may be used not only as an operation power supply of the vehicle 1000, but also as a driving power supply of the vehicle 1000 to replace or partially replace fuel or natural gas to provide driving power for the vehicle 1000.

The battery mentioned in the embodiments of the present application refers to a single physical module that includes one or more battery cells to provide a higher voltage and capacity. A plurality of battery cells may be connected in series, parallel, or series and parallel to directly form the battery. The series and parallel connection refers to both series and parallel connection in the plurality of battery cells. A plurality of battery cells may alternatively be first connected in series, parallel, or series and parallel to form a battery cell module, and then a plurality of battery cell modules are connected in series, parallel, or series and parallel to form the battery.

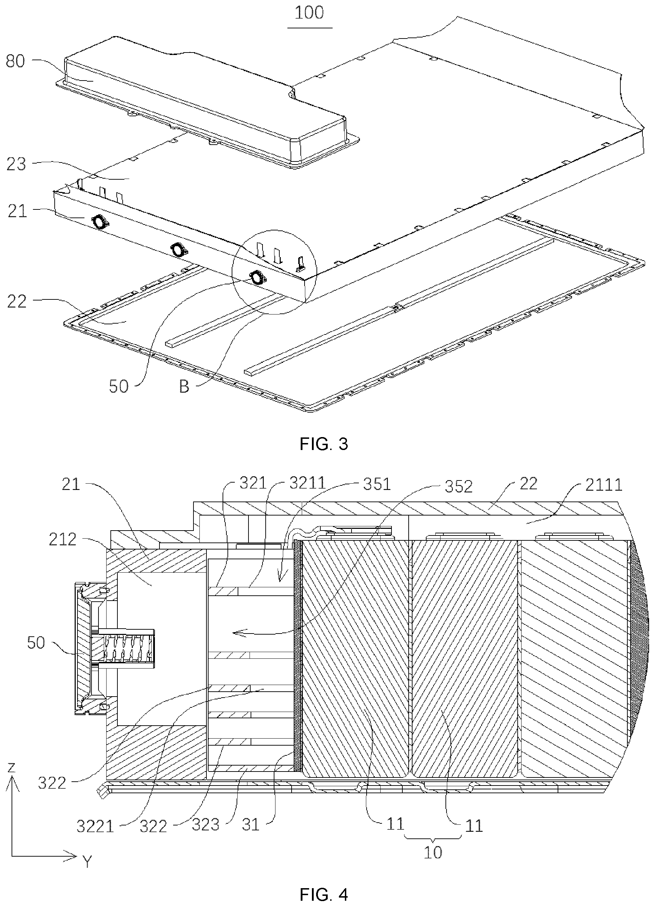

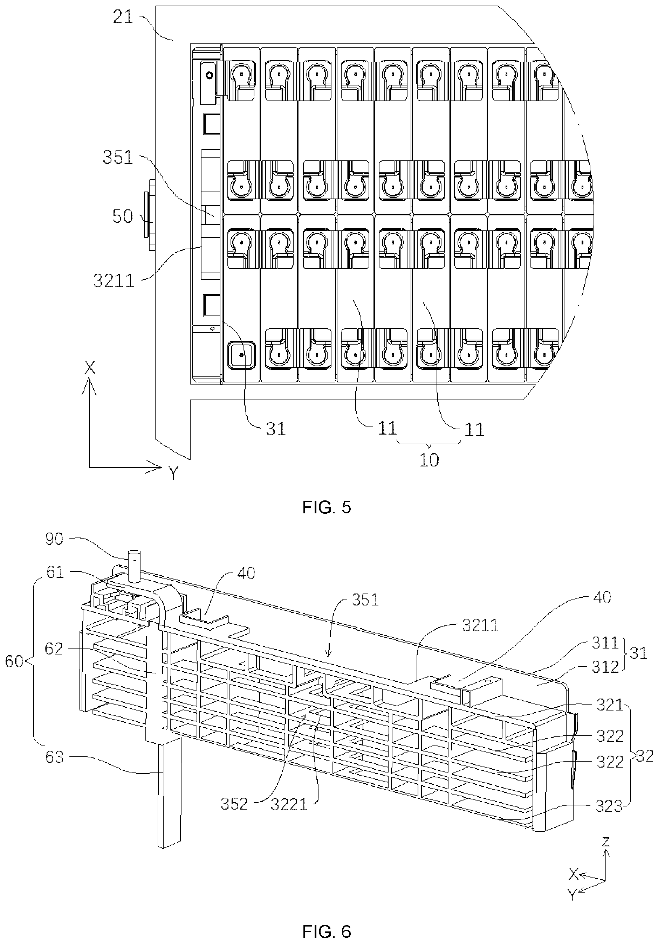

Referring to FIG. 2 and FIG. 3, and further referring to FIG. 4 and FIG. 5, FIG. 2 is an exploded view of a battery from a first perspective according to some embodiments of the present application; FIG. 3 is an exploded view of the battery from a second perspective according to some embodiments of the present application; FIG. 4 is a partial front cross-sectional view of the battery according to some embodiments of the present application; and FIG. 5 is a top view shown in FIG. 4. The battery 100 provided in some embodiments of the present application includes a box body 20, a battery cell group 10, and an end plate 30. The box body 20 includes a side wall 21 for forming an accommodating cavity 211 by enclosing, and the side wall 21 has an exhaust port 212. The battery cell group 10 is disposed inside the accommodating cavity 211 and includes a plurality of battery cells 11, and the plurality of battery cells 11 are stacked. The end plate 30 is disposed inside the accommodating cavity 211 and located between the battery cell group 10 and the side wall 21, the end plate 30 covers the exhaust port 212, the end plate 30 is provided with a guide passage 35, and the guide passage 35 is used for connecting the accommodating cavity 211 and the exhaust port 212.

The box body 20 is used for providing an accommodating space for the battery cell group 10 to store and protect the battery cell group 10. The box body 20 may be of a square structure, a cylinder, an elliptical cylinder, or the like. The box body 20 includes the side wall 21 for forming the accommodating cavity 211 by enclosing, and the side wall 21 may have many structures according to different shapes of the box body 20. For example, with reference to FIG. 2, the box body 20 may include a top wall 22, a side wall 21, and a bottom wall 23, where the top wall 22 is opposite to the bottom wall 23, the side wall 21 is disposed at a periphery of the bottom wall 23, and the side wall 21 is of a hollow structure with openings at two ends; an inner cavity of the side wall 21 forms the accommodating cavity 211, and the side wall 21 is connected to the top wall 22 and the bottom wall 23; and the side wall 21, the top wall 22, and the bottom wall 23 jointly confine an accommodating space that may accommodate the battery cell group 10.

In some embodiments, the top wall 22 and the side wall 21 may be integrated to form a shell, one end of the shell has an opening, the bottom wall 23 is split from the side wall 21, the bottom wall 23 forms a cover structure, and the bottom wall 23 covers the opening of the shell to seal the battery cell group 10 inside the shell.

In other embodiments, the bottom wall 23 and the side wall 21 may alternatively be integrated to form a shell, one end of the shell has an opening, the top wall 22 is split from the side wall 21, the top wall 22 forms a cover structure, and the top wall 22 covers the opening of the shell to seal the battery cell group 10 inside the shell.

For example, as shown in FIG. 2, the box body 20 may include a top wall 22, a bottom wall 23, and a side wall 21, where the side wall 21 forms a shell with openings at two ends, and the bottom wall 23 and the top wall 22 cover the two openings of the shell separately to form a closed space for accommodating the battery cell group 10.

The shell enclosed by the side wall 21 may be rectangular, square, or in other shapes, and the box body 20 may be made of a metal material, such as aluminum, aluminum alloy, or nickel-plated steel. In some embodiments of the present application, the box body 20 may be hexahedral, and the top wall 22 and the bottom wall 23 may be of a square or rectangular plate structure.

Specifically, a width direction of the box body 20 extends in a first direction X, a length direction extends in a second direction Y, and a height direction extends in a third direction Z. In the third direction Z, the top wall 22 is located above the side wall 21, and the bottom wall 23 is located below the side wall 21.

The battery cell group 10 is disposed inside the accommodating cavity 211, the battery cell group 10 includes a plurality of battery cells 11, the plurality of battery cells 11 may be connected in series, parallel, or series and parallel (the series and parallel connection refers to both series connection and parallel connection in the plurality of battery cells 11) to form the battery cell group 10, and the battery cell group 10 is disposed in the accommodating cavity 211 of the box body 20. Of course, the battery 100 may alternatively include a plurality of battery cell groups 10, and the plurality of battery cell groups 10 are then connected in series, parallel, or series and parallel to form the battery 100, that is, a single battery cell group 10 or a plurality of battery cell groups 10 may be disposed inside the accommodating cavity 211. Each battery cell 11 may be a secondary battery 100, a primary battery 100, a lithium-sulfur battery 100, a sodium-ion battery 100, or a magnesium-ion battery 100, but is not limited thereto. The battery cell 11 may be cylindrical, flat, cuboid, or in other shapes.

The end plate 30 is used as a limiting member and fastener for the battery cell group 10, to fasten and limit the plurality of battery cells 11 of the battery cell group 10, and to limit movement of the battery cell group 10 within the box body 20.

In some embodiments of the present application, the plurality of battery cells 11 of the battery cell group 10 are arranged in the length direction (second direction Y) of the box body 20, and end plates 30 are disposed at two ends of the battery cell group 10 in the second direction Y and between the battery cell group 10 and the side wall 21.

A material of the end plate 30 may be plastic, nylon, fiberglass, or a conventional metal material such as aluminum or aluminum alloy. The end plate 30 may be an injection molded member or a die casting member.

The exhaust port 212 provides an outlet passage 34 for the box body 20 of the battery 100, so that gas generated by the battery cells 11 inside the box body 20 can be discharged out of the box body 20 via the exhaust port 212.

It may be understood that "the end plate 30 covers the exhaust port 212" indicates that, after the battery 100 is assembled, the end plate 30 is attached or at least partially attached to the side wall 21 provided with the exhaust port 212, and the portion, attached to the side wall 21, of the end plate 30 forms a blockage between the exhaust port 212 and the accommodating cavity 211 to limit the communication between the accommodating cavity 211 and the exhaust port 212. In some embodiments, a side, facing the side wall 21 of the box body 20, of the end plate 30 may be attached to the side wall 21 to ensure space utilization of the box body 20, thereby improving the energy density of the battery 100.

The end plate 30 is provided with a guide passage 35, and the guide passage 35 is in communication with the accommodating cavity 211 and the exhaust port 212. The accommodating cavity 211, the guide passage 35, and the exhaust port 212 form a gas guide path to guide the gas generated in the battery 100 to flow directionally and ultimately be discharged via the exhaust port 212.

It may be understood that the battery 100 may be provided with one exhaust port 212 and one guide passage 35, or a plurality of exhaust ports 212 and a plurality of guide passages 35, where the plurality of exhaust ports 212 may correspond to the plurality of guide passages 35 one to one.

For example, with reference to FIG. 2, three battery cell groups 10 are disposed inside the battery 100, an end plate 30 is disposed between each battery cell group 10 and the side wall 21 of the box body 20, and each end plate 30 is provided with a guide passage 35. Correspondingly, the side wall 21 of the box body 20 is provided with three exhaust ports 212, and the three exhaust ports 212 correspond to the guide passages 35 on the three end plates 30 one to one.

The side wall 21 of the box body 20 of the battery 100 is provided with the exhaust port 212, the end plate 30 is provided with the guide passage 35, and the guide passage 35 connects the accommodating cavity 211 and the exhaust port 212 of the box body 20, where the guide passage 35 can guide the gas generated in the battery 100, and the gas generated in the battery 100 is enabled to arrive at the exhaust port 212 of the box body 20 along the guide passage 35 in a quickly and timely manner and is finally discharged out of the box body 20 from the exhaust port 212, thereby ensuring exhaust smoothness of the battery 100 and improving safety of the battery 100. Meanwhile, the guide passage 35 and the exhaust port 212 can effectively avoid retention and cross flowing of the gas discharged by the battery cells 11 inside the box body 20, thereby improving the safety of the battery 100. The guide passage 35 is disposed on the end plate 30, and the end plate 30 can directly cover the exhaust port 212 of the box body 20. Such a structure prevents the guide passage 35 from occupying a space inside the box body 20 alone, avoids affecting a structural density inside the box body 20 of the battery 100, and is conducive to ensuring space utilization in the box body 20, thereby ensuring an overall energy density of the battery 100.

In some embodiments, with reference to FIG. 4, the box body 20 includes a top wall 22, the side wall 21 is disposed at a periphery of the top wall 22, the battery cell group 10 is located below the top wall 22, there is an exhaust gap 2111 between the top wall 22 and the battery cell group 10, and the guide passage 35 is used for connecting the exhaust gap 2111 and the exhaust port 212.

The exhaust gap 2111 may be implemented in many ways, for example, a preset gap is reserved between the top wall 22 of the box body 20 and a top of the battery cell group 10, and the preset gap forms the exhaust gap 2111. Alternatively, a recessed exhaust groove is disposed on a side, facing the battery cell group 10, of the top wall 22 of the box body 20. After the battery 100 is assembled, the top wall 22 of the box body 20 abuts against a top structure of the battery cell group 10, and the exhaust groove forms the exhaust gap 2111. Of course, it may be understood that the exhaust gap 2111 may be located inside the accommodating cavity 211 and is a portion of the accommodating cavity 211, or the exhaust gap 2111 may be in communication with the accommodating cavity 211.

The exhaust gap 2111 is disposed between the battery cell group 10 and the top wall 22 of the box body 20, and the exhaust gap 2111 can further guide the gas discharged by the battery cells 11, so that the gas discharged by the battery cells 11 is discharged out of the box body 20 of the battery 100 via the exhaust gap 2111, the guide passage 35, and the exhaust port 212, free escape of the gas inside the box body 20 is avoided, and the risk of safety hazards caused by gas retention inside the box body 20 is further reduced.

It may be understood that each battery cell 11 of the battery cell group 10 has a gas discharge portion (such as an explosion-proof valve). The gas discharge portion of each battery cell 11 of the battery cell group 10 is disposed on a side, facing the top wall 22, of the battery cell group 10, the exhaust gap 2111 is disposed between the top wall 22 of the box body 20 and the battery cell group 10 to ensure that the gas discharged by the battery cells 11 can directly enter the exhaust gap 2111, and the exhaust gap 2111 guides the gas to flow to the guide passage 35.

In some embodiments, in a thickness direction of the end plate 30, the guide passage 35 is directly opposite to the exhaust port 212 or projections of the guide passage 35 and the exhaust port 212 overlap at least partially.

It may be understood that the thickness direction of the end plate 30 extends along a line connecting the side wall 21 with the battery cell group 10, that is, one side of the end plate 30 in the thickness direction faces the battery cell group 10 and abuts against the battery cell group 10 directly or indirectly, and the other side of the end plate 30 in the thickness direction faces the side wall 21 of the box body 20.

Specifically, with reference to FIG. 2, the plurality of battery cells 11 of the battery cell group 10 are arranged in a length direction (second direction Y) of the box body 20, and the thickness direction of the end plate 30 extends in the second direction Y.

The guide passage 35 is directly opposite to the exhaust port 212 or the projections of the guide passage 35 and the exhaust port 212 overlap at least partially to ensure a gas passing surface between the guide passage 35 and the exhaust port 212, so that the gas passing through the guide passage 35 can quickly and timely enter the exhaust port 212 and be discharged via the exhaust port 212.

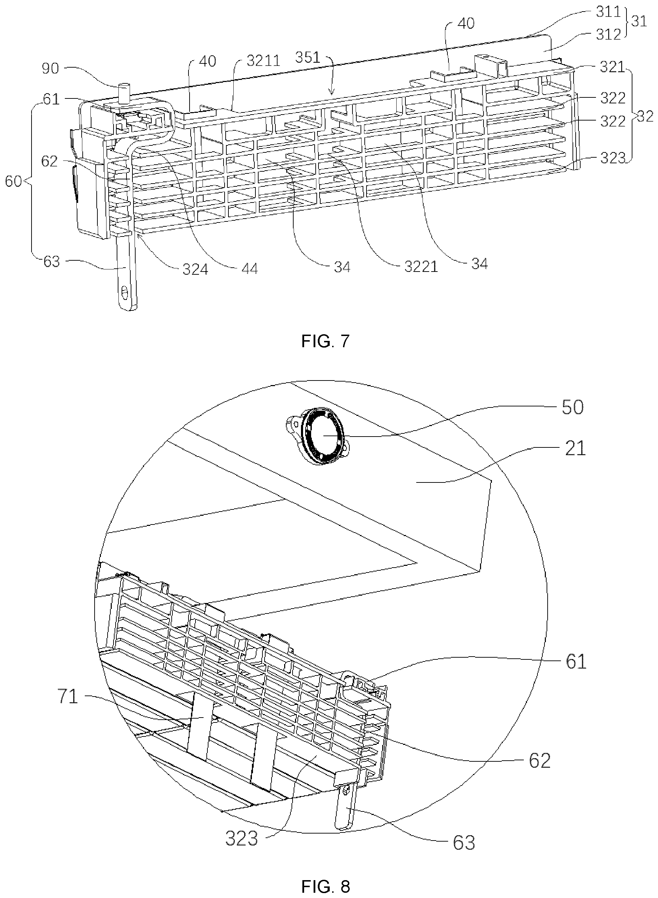

In some embodiments, referring to FIG. 4 and FIG. 5, and further referring to FIG. 6 and FIG. 7, FIG. 6 is an axonometric view of the end plate 30 from a first perspective according to some embodiments of the present application, and FIG. 7 is an axonometric view of the end plate 30 from a second perspective according to some embodiments of the present application. The guide passage 35 includes a vertical passage 351 and a horizontal passage 352, an upper end of the vertical passage 351 is in communication with the accommodating cavity 211, one end of the horizontal passage 352 in the thickness direction is in communication with the vertical passage 351, and the other end is in communication with the exhaust port 212.

The upper end of the vertical passage 351 is in communication with the accommodating cavity 211, so that the gas inside the box body 20 enters the guide passage 35 from the upper end of the vertical passage 351, and then is guided by the horizontal passage 352 to the exhaust port 212 disposed on the side wall 21. The vertical passage 351 and the horizontal passage 352 are in communication with the exhaust port 212 of the side wall 21 and the accommodating cavity 211.

Based on the implementation form that "there is an exhaust gap 2111 between the top wall 22 and the battery cell group 10, and the guide passage 35 is used for connecting the exhaust gap 2111 and the exhaust port 212", the upper end of the vertical passage 351 is in communication with the exhaust gap 2111.

Specifically, as shown in FIG. 5, the vertical passage 351 extends in a third direction Z, the horizontal passage 352 extends in the second direction Y, and the upper end of the vertical passage 351 is in communication with the exhaust gap 2111 in the third direction Z.

The guide passage 35 includes the vertical passage 351 and the horizontal passage 352 in communication with each other, the upper end of the vertical passage 351 is in communication with the accommodating cavity 211, and the horizontal passage 352 connects the vertical passage 351 and the exhaust port 212. The communication structure of the vertical passage 351 and the horizontal passage 352 converts the direction of the guide passage 35. The exhaust port 212 is disposed on the side wall 21 of the box body 20, the vertical passage 351 guides the gas into the guide passage 35, and then the gas flows through the horizontal passage 352 towards the exhaust port 212 disposed on the side wall 21 of the box body 20, so that the gas can be smoothly discharged out of the battery 100 along the horizontal passage 352 and the exhaust port 212.

In some embodiments, the vertical passage 351 does not penetrate the end plate 30 in a vertical direction.

It may be understood that the upper end of the vertical passage 351 is in communication with the accommodating cavity 211, so the "vertical direction" refers to extending from top to bottom in the third direction Z, that is, the vertical passage 351 extends from top to bottom in the third direction Z from the upper end of the end plate 30, but does not penetrate the bottom of the end plate 30.

The vertical passage 351 does not penetrate the end plate 30. On the one hand, the end plate 30 can block and limit vertical flowing of the gas, to avoid retention of the high-temperature and high-pressure gas inside the box body 20 that continuously flows down the vertical passage 351 to the bottom wall 23 of the box body 20, so the vertical passage 351 does not penetrate the end plate 30 to further ensure the directional guidance effect of the guide passage 35 on the gas. On the other hand, the design of the vertical passage that does not fully penetrate the end plate in the height direction can effectively reduce diffusion of the high-temperature gas and avoid direct transfer of the gas to the bottom of the box body and leakage to the battery cells near the end plate.

In some embodiments, with continued reference to FIG. 6 and FIG. 7, the end plate 30 includes an end plate body 31 and a plurality of first reinforcing ribs 32, the end plate 30 has a first surface 311 facing the battery cell group 10 and a second surface 312 facing away from the battery cell group 10, and the first surface 311 abuts against the battery cell group 10; the plurality of first reinforcing ribs 32 are formed on the second surface 312 and abut against the side wall 21, and the plurality of first reinforcing ribs 32 are spaced in the vertical direction; the plurality of first reinforcing ribs 32 include a top reinforcing rib 321, middle reinforcing ribs 322, and a bottom reinforcing rib 323; and the vertical passage 351 penetrates at least the top reinforcing rib 321, and the horizontal passage 352 is formed between the two adjacent first reinforcing ribs 32.

The first reinforcing ribs 32 function to improve structural strength of the end plate body 31. The first reinforcing rib 32 may be similar to a strip structure or a plate structure, or may be a planar structure or a curved structure. For example, as shown in FIG. 6, the first reinforcing rib 32 is a planar plate structure. The first reinforcing ribs 32 and the end plate body 31 may be integrally formed or assembled by welding, screw connection, or the like.

It may be understood that the plurality of first reinforcing ribs 32 abut against the side wall 21, that is, one ends, facing the side wall 21, of the plurality of reinforcing ribs are attached to the side wall 21, and a surface where the ends, facing the side wall 21, of the first reinforcing ribs 32 are located covers the exhaust port 212, to block the communication between the exhaust port 212 on the side wall 21 and the accommodating cavity 211.

"The vertical passage 351 penetrates at least the top reinforcing rib 321, and the horizontal passage 352 is formed between the two adjacent first reinforcing ribs 32" indicates that the guide passage 35 may be implemented by many structures, where the vertical passage 351 may penetrate only the top reinforcing rib 321, and the horizontal passage 352 is formed between the top reinforcing rib 321 and the middle reinforcing rib 322 adjacent to the top reinforcing rib 321; the vertical passage 351 may penetrate the top reinforcing rib 321 and some middle reinforcing ribs 322 sequentially adjacent to the top reinforcing rib 321, and the horizontal passage 352 is formed between the top reinforcing rib 321 in communication with the vertical passage 351 and any two first reinforcing ribs 32 among the middle reinforcing ribs 322; or the vertical passage 351 may penetrate the top reinforcing rib 321 and all the middle reinforcing ribs 322, and the horizontal passage 352 is formed between any two adjacent first reinforcing ribs 32 between the top reinforcing rib 321 and the bottom reinforcing rib 323.

The first reinforcing ribs 32 effectively improve the structural strength of the end plate 30 and improve deformation resistance of the end plate 30. Meanwhile, compared with increasing an overall thickness of the end plate 30 to improve the strength of the end plate 30, the structure of the first reinforcing ribs 32 ensures the structural strength of the end plate 30 and reduces overall weight and material loss of the end plate 30, thereby reducing weight and material costs of the battery 100. The guide passage 35 may be directly formed on the first reinforcing ribs 32 by penetrating some first reinforcing ribs 32 in the vertical direction according to the position of the exhaust port 212 on the side wall 21, so the implementation is easy.

In some embodiments, with continued reference to FIG. 6 and FIG. 7, the top reinforcing rib 321 is provided with a first opening 3211, the middle reinforcing rib 322 is provided with a second opening 3221, the first opening 3211 is in communication with the second opening 3221 to form the vertical passage 351, and an area of the first opening 3211 is greater than that of the second opening 3221.

Shapes of the first opening 3211 and the second opening 3221 may be diverse, such as rectangular, circular, or elliptical. The shapes of the first opening 3211 and the second opening 3221 may be the same or different. In the vertical direction, a projection of the second opening 3221 may completely fall into a projection of the first opening 3211, or a projection of the second opening 3221 may partially fall into a projection of the first opening 3211.

For example, as shown in FIG. 6 and FIG. 7, the first opening 3211 and the second opening 3221 are both rectangular, and the projection of the second opening 3221 completely falls into the projection of the first opening 3211.

The top reinforcing rib 321 is provided with the larger first opening 3211, where the first opening 3211 can collect gas and guide the gas quickly into the vertical passage 351.

In some embodiments, the top reinforcing rib 321 is further provided with a clamping portion 40 for mating with a clamping mechanism for the end plate 30.

There may be one, two, or more clamping portions 40, and a position of the clamping portion 40 on the top reinforcing rib 321 may be flexibly adjusted according to actual assembly process requirements of the battery 100.

The clamping portion 40 may be of a structure similar to a strip, column, block, or hook that protrudes from the top reinforcing rib 321, or other structures. For example, with continued reference to FIG. 6 and FIG. 7, the clamping portion 40 is of a hole-like structure formed on the top reinforcing rib 321 and extending from the top reinforcing rib 321 to the middle reinforcing rib 322.

The top reinforcing rib 321 is provided with the clamping portion 40, which enables the clamping mechanism to act on the clamping portion 40 and clamp the end plate 30, thereby facilitating assembly of the end plate 30.

In some embodiments, with continued reference to FIG. 6 and FIG. 7, the end plate 30 further includes a plurality of second reinforcing ribs 33, the plurality of second reinforcing ribs 33 are formed on the second surface 312 and abut against the side wall 21, the plurality of second reinforcing ribs 33 intersect the plurality of first reinforcing ribs 32, and each second reinforcing rib 33 extends in the vertical direction.

Similar to the first reinforcing rib 32, the second reinforcing rib 33 may be similar to a strip structure or a plate structure, or may be a planar structure or a curved structure. For example, as shown in FIG. 6 and FIG. 7, based on the implementation form that the first reinforcing rib 32 is the planar plate structure, the second reinforcing rib 33 is also a planar plate structure.

The end plate 30 includes the second reinforcing ribs 33 intersecting the first reinforcing ribs 32, and the first reinforcing ribs 32 and the second reinforcing ribs 33 form a mesh structure, which further improves the structural strength of the end plate 30.

It may be understood that the vertical passage 351 may be located between any two adjacent second reinforcing ribs 33, or span one or more second reinforcing ribs 33.

In some embodiments, with reference to FIG. 6 and FIG. 7, the vertical passage 351 is located between two adjacent second reinforcing ribs 33.

The vertical passage 351 is disposed between the two adjacent second reinforcing ribs 33, and the two adjacent second reinforcing ribs 33 intercept and limit horizontal flowing of the gas, so as to further improve the gas guiding effect of the guide passage 35.

In some embodiments, with reference to FIG. 2 and FIG. 4 again, the battery 100 may further include a pressure relief mechanism 50, the pressure relief mechanism 50 is disposed on the side wall 21, one end of the pressure relief mechanism 50 is in communication with the exhaust port 212, and the pressure relief mechanism 50 is configured to release internal pressure when the internal pressure of the battery 100 reaches a threshold.

The pressure relief mechanism 50 may be implemented by many structures. The pressure relief mechanism 50 may be an explosion-proof valve mounted on the side wall 21 and in communication with the exhaust port 212, a balance valve mounted on the side wall 21 and in communication with the exhaust port 212, or a structural weak area disposed on the side wall 21 of the box body 20. Of course, the structural weak area may be integrally formed with the side wall 21 of the box body 20, or may be split from the side wall 21 of the box body 20. For example, a carrier having a structural weak area is disposed separately, a mounting portion for the carrier is reserved on the side wall 21 of the box body 20, and the carrier carrying the weak area is mounted on the mounting portion of the side wall 21.

The battery 100 is provided with the pressure relief mechanism 50 in communication with the exhaust port 212, where the pressure relief mechanism 50 effectively controls discharge frequency of the battery 100. When the pressure relief mechanism 50 is in a non-brake state, impurities such as dust and water stains can be prevented from entering the box body 20 via the exhaust port 212.

In other embodiments, with continued reference to FIG. 6 and FIG. 7, an electrical energy lead-out member 60 may be further embedded into the end plate 30, and the electrical energy lead-out member 60 is used for leading out electrical energy of the battery cell group 10. By embedding the electrical energy lead-out member 60 into the end plate 30, a mounting position of the electrical energy lead-out member 60 in the box body 20 of the battery 100 can be effectively saved, the space utilization of the box body 20 can be further improved, and the energy density of the battery 100 is improved accordingly.

Specifically, the electrical energy lead-out member 60 may include a first segment 61, a second segment 62, and a third segment 63 connected in series, the second segment 62 is embedded in the end plate 30, the first segment 61 and the third segment 63 extend out from the end plate 30, and the first segment 61 is electrically connected to the battery cell group 10. The electrical energy lead-out member 60 should have conductivity, and a material of the electrical energy lead-out member 60 may be a metal material with good conductivity.

"The second segment 62 of the electrical energy lead-out member 60 may be embedded in the end plate 30" may be implemented by many structures. For example, the electrical energy lead-out member 60 may be integrally formed with the end plate 30, and the electrical energy lead-out member 60 may alternatively be detachably assembled on the end plate 30. The end plate 30 and the electrical energy lead-out member 60 may be detached in many ways. For example, the end plate 30 may be provided with a clamping groove, and the electrical energy lead-out member 60 may be clamped into the clamping groove and connected to the end plate 30; the electrical energy lead-out member 60 is bonded to the end plate 30 through a glue; or the electrical energy lead-out member 60 is fastened to the end plate 30 through a fastener.

This embodiment does not limit a quantity of the electrical energy lead-out member 60. One electrical energy lead-out member 60 or a plurality of electrical energy lead-out members 60 may be embedded in one end plate 30.

The first segment 61 and the third segment 63 of the electrical energy lead-out member 60 extend out from the end plate 30 to form free connecting ends. Extension directions of the first segment 61 and the third segment 63 from the end plate 30 may be flexibly set according to an overall structure of the battery 100. For example, an extension position of the first segment 61 may be close to an electrical energy output portion of the battery cell group 10.

In some embodiments, the first segment 61 extends out from the top of the end plate 30 to electrically connect with the battery cell group 10, and the third segment 63 extends out from the bottom of the end plate 30. In order to lead the electrical energy of the battery cell group 10 out of the battery 100, the third segment 63 of the electrical energy lead-out member 60 may pass through the box body 20 after extending out from the bottom of the end plate 30, so as to lead the electrical energy of the battery cell group 10 out of the battery 100. The first segment 61 and the third segment 63 extend from the top and bottom of the end plate 30 separately, which can effectively avoid interference with the assembly of the end plate 30 and prevent the electrical energy lead-out member 60 from occupying the space inside the box of the battery 100.

Based on the implementation form that "the end plate 30 includes an end plate body 31 and a plurality of first reinforcing ribs 32, the end plate body 31 has a first surface 311 facing the battery cell group 10 and a second surface 312 facing away from the battery cell group 10, and the first surface 311 abuts against the battery cell group 10. The plurality of first reinforcing ribs 32 are formed on the second surface 312 and abut against the side wall 21, and the plurality of first reinforcing ribs 32 are spaced up and down", the second segment 62 may penetrate the plurality of first reinforcing ribs 32 and be integrally formed with the plurality of first reinforcing ribs 32 by injection molding or detachably connected with the plurality of first reinforcing ribs 32.

For example, with reference to FIG. 7, the electrical energy lead-out member 60 is detachably disposed on the end plate 30, and each first reinforcing rib 32 is provided with an avoidance port 324 for avoiding the electrical energy lead-out member 60. The electrical energy lead-out member 60 passes through the avoidance port 324 of each first reinforcing rib 32 sequentially, and the electrical energy lead-out member 60 is assembled on the plurality of first reinforcing ribs 32. In addition, misalignment of two adjacent avoidance ports 324 enables the electrical energy lead-out member 60 to be bent twice on the plurality of first reinforcing ribs 32.

Due to the detachable connection between the electrical energy lead-out member 60 and the end plate 30, a gap necessarily exists at the junction between the electrical energy lead-out member 60 and the end plate 30. When high-temperature and high-pressure gas is generated in the battery 100, the high-temperature and high-pressure gas may flow along the electrical energy lead-out member 60 via the gap between the end plate 30 and the electrical energy lead-out member 60, thereby posing the risk of melting of the electrical energy lead-out member 60 by the high-temperature and high-pressure gas to cause great potential safety hazards. In this embodiment, the electrical energy lead-out member 60 is bent twice, so that the extension direction of the electrical energy lead-out member 60 changes at least twice. By changing the extension direction of the electrical energy lead-out member 60, the risk of gas flow along the electrical energy lead-out member 60 is effectively reduced.

Of course, in practical applications, the electrical energy lead-out member 60 may be bent twice, three times, four times, or even more times.

In some embodiments, the bent angle 64 of the electrical energy lead-out member 60 is 40° to 130°. That is, the electrical energy lead-out member 60 is bent to form a bent angle 64, and the bent angle 64 is 40° to 130°. In some embodiments, the bent angle 44 of the electrical energy lead-out member 40 is 75° to 100°.

For example, the bent angle 64 of the electrical energy lead-out member 60 is 90°.

A conductive metal is generally used as the electrical energy lead-out member 60 in the battery 100. A too small bent angle 64 easily affects structural strength of the electrical energy lead-out member 60 to cause a risk of breakage of the electrical energy lead-out member 60, while a too large bent angle 64 cannot effectively block the gas. In this embodiment, the bent angle 64 of the electrical energy lead-out member 60 is controlled between 40° and 130°, so as to ensure the structural strength of the electrical energy lead-out member 60 and achieve a good blocking effect on the gas.

In some embodiments, the battery 100 may further include an output electrode 90, one end of the output electrode 90 is electrically connected to the battery cell group 10 to output the electrical energy of the battery cell group 10, and the other end of the output electrode 90 is electrically connected to the first segment 61.

The output electrode 90 may be disposed on the end plate 30 or another structure in the battery 100. For example, as shown in FIG. 6 and FIG. 7, the output electrode 90 is disposed on the top reinforcing rib 321. The first segment 61 of the electrical energy lead-out member 60 may be connected to the output electrode 90 by screw connection, welding, or the like.

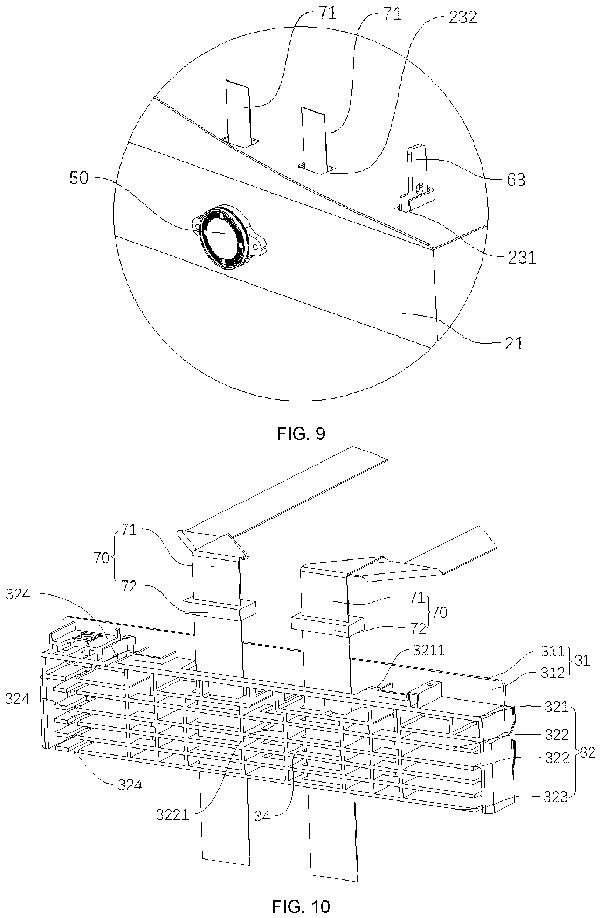

In some embodiments, referring once again to FIG. 2 and FIG. 3, and further referring to FIG. 8 and FIG. 9, FIG. 8 is a partially enlarged view of part A shown in FIG. 2, and FIG. 9 is a partially enlarged view of part B shown in FIG. 3. The box body 20 further includes a bottom wall 23, the side wall 21 is disposed at the periphery of the bottom wall 23, the bottom wall 23 is provided with a through hole 231, and the third segment 63 extends out from the through hole 231 to lead the electrical energy to the outside of the box body 20.

In some embodiments, with reference to FIG. 2 and FIG. 3 again, the battery 100 may further include a high-voltage distribution box 80, the high-voltage distribution box 80 is disposed outside the box body 20, and the third segment 63 extends out of the box body 20 to connect with the high-voltage distribution box 80.

It may be understood that the high-voltage distribution box 80 may be fixed to an outer wall of the box body 20 by screw connection, riveting, welding, or the like. In some embodiments, the high-voltage distribution box 80 may be sealed and connected to the bottom wall 23 of the box body 20, an inner cavity of the high-voltage distribution box 80 is in communication with the through hole 231 on the bottom wall 23 of the box body 20, and the electrical energy lead-out member 60 extends out of the box body 20 via the through hole 231 and then directly enters the inner cavity of the high-voltage distribution box 80, thereby ensuring sealing of the box body 20.

The third segment 63 of the electrical energy lead-out member 60 extends out of the box body 20 to connect with the high-voltage distribution box 80, and the high-voltage distribution box 80 plays a role in protecting a system of the power battery 100 and transmitting and distributing power in charging and discharging processes of the battery 100.

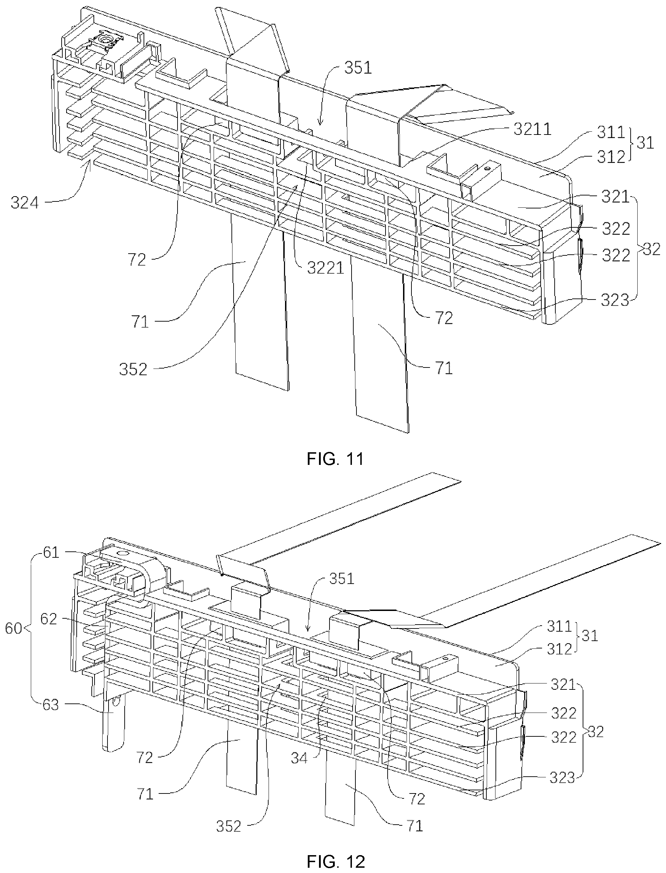

In other embodiments, referring to FIG. 10 and FIG. 11, FIG. 10 is a schematic diagram of a state that a sampling unit 70 penetrates the end plate 30 according to some embodiments of the present application, and FIG. 11 is a schematic diagram of a mating structure that the sampling unit 70 penetrates the end plate 30 as shown in FIG. 10. The battery 100 may further include the sampling unit 70, the sampling unit 70 is used for collecting signals from the battery cell group 10, the sampling unit 70 penetrates the end plate 30, and one end of the sampling unit 70 is connected to the battery cell group 10.

The sampling unit 70 is used for collecting signals from the battery cell group 10, including but not limited to collecting voltage signals, temperature signals, and other signals from the battery cell group 10. The sampling unit 70 may be connected to a control system of the battery 100 to enable the control system of the battery 100 to collect and monitor information such as voltage and temperature of the battery 100.

Similarly, the sampling unit 70 penetrates the end plate 30 in many ways, and the sampling unit 70 and the end plate 30 may be movably matched or fixed in relative positions. Specifically, the sampling unit 70 may be integrally formed with the end plate 30, or may be split from the end plate 30 and fixed to the end plate 30 by clamping, screwing, gluing, or the like. Alternatively, the end plate 30 is provided with a passage 34 through which the sampling unit 70 passes, so that the sampling unit 70 penetrates the end plate 30 through the passage 34.

For example, the end plate 30 is provided with the passage 34 through which the sampling unit 70 passes, and the passage 34 penetrates the end plate 30 and extends from the top to bottom of the end plate 30. One end of the sampling unit 70 extends out from the top of the end plate 30 to connect with the battery cell group 10, and the other end of the sampling unit 70 extends out from the bottom of the end plate 30 and passes through the box body 20 to lead the signals to the outside of the box body 20.

Based on the implementation form that "the end plate 30 includes an end plate body 31 and a plurality of first reinforcing ribs 32", the passage 34 may penetrate the plurality of first reinforcing ribs 32, so that one end of the sampling unit 70 extends out from the top reinforcing rib 321 to connect with the battery cell group 10, the other end of the sampling unit 70 extends out from the bottom reinforcing rib 323 and passes through the box body 20 to lead the signals to the outside of the box body 20, and after passing through the box body 20, the other end of sampling unit 70 may be directly connected to a control system of a power consumption apparatus or to a separate control system configured for the battery 100.

In some embodiments, based on the implementation form that "the battery 100 includes a high-voltage distribution box 80, the high-voltage distribution box 80 is disposed outside the box body 20, and the third segment 63 extends out of the box body 20 to connect with the high-voltage distribution box 80", the control system of the battery 100 may be integrated into a box body of the high-voltage distribution box 80, that is, both the third segment 63 of the electrical energy lead-out member 60 and one end of the sampling unit 70 extend into the box body of the high-voltage distribution box 80 after passing through the box body 20.

In some embodiments, as shown in FIG. 10, the sampling unit 70 may include a sampling unit body 71 and an occluding portion 72, the occluding portion 72 is formed on an outer circumferential surface of the sampling unit body 71 and protrudes from the outer circumferential surface of the sampling unit body 71, and the occluding portion 72 is used for covering a gap between the sampling unit body 71 and an inner wall of the passage 34.

For example, as shown in FIG. 11, based on the implementation form that "the box body 20 includes a top wall 22, there is an exhaust gap 2111 between the top wall 22 and the battery cell group 10, and the guide passage 35 connects the exhaust gap 2111 and the exhaust port 212", one end of the sampling unit 70 extends out from the top reinforcing rib 321 to connect with the battery cell group 10, the occluding portion 72 is located above the top reinforcing rib 321, and after the sampling unit 70 penetrates the plurality of first reinforcing ribs 32, the occluding portion 72 covers a gap between the sampling unit body 71 and the top reinforcing rib 321, so as to block gas from upper reaches of gas flow.

When high-temperature and high-pressure gas is generated in the battery 100, the occluding portion 72 may effectively avoid flowing of the gas along the gap between the sampling unit 70 and the end plate 30, thereby reducing the risk of damage of the sampling unit 70 by the high-temperature and high-pressure gas, and avoiding flowing of the high-temperature and high-pressure gas in the box body 20 along the gap between the sampling unit 70 and the end plate 30 to affect normal directional discharge of the gas in the battery 100.

It may be understood that relative positions of the electrical energy lead-out member 60, the guide passage 35, and the sampling unit 70 on the end plate 30 may be flexibly configured according to actual different connection positions of the battery 100.

For example, referring to FIG. 12, FIG. 12 is a schematic structural diagram of the end plate 30 according to some embodiments of the present application. On the same end plate 30, one guide passage 35 is disposed, two sampling units 70 penetrate, and one electrical energy lead-out member 60 is embedded. The two sampling units 70 are limited in the end plate 30 at interval, the guide passage 35 is located between the two sampling units 70, and the electrical energy lead-out member 60 is located on one side of the two sampling units 70.

According to some embodiments of the present application, with reference to FIG. 2 to FIG. 7, the present application provides a battery 100. The battery 100 includes a box body 20, a battery cell group 10, and an end plate 30. The box body 20 includes a top wall 22 and a side wall 21 for forming an accommodating cavity 211 by enclosing, the side wall 21 is disposed at a periphery of the top wall 22, and the side wall 21 has an exhaust port 212. The battery cell group 10 is disposed inside the accommodating cavity 211 and includes a plurality of battery cells 11, the plurality of battery cells 11 are stacked, and there is an exhaust gap 2111 between the battery cell group 10 and the top wall 22. The end plate 30 is disposed inside the accommodating cavity 211 and located between the battery cell group 10 and the side wall 21. The end plate 30 includes an end plate body 31, a plurality of first reinforcing ribs 32, and a plurality of second reinforcing ribs 33. The end plate body 31 has a first surface 311 facing the battery cell group 10 and a second surface 312 facing away from the battery cell group 10, the first surface 311 abuts against the battery cell group 10, a plurality of first reinforcing ribs 32 and a plurality of second reinforcing ribs 33 are formed on the second surface 312, the plurality of first reinforcing ribs 32 are spaced in a vertical direction, the plurality of second reinforcing ribs 33 intersect the plurality of first reinforcing ribs 32, each second reinforcing rib 33 extends in the vertical direction, and the plurality of first reinforcing ribs 32 and the plurality of second reinforcing ribs 33 all abut against the side wall 21.

The plurality of first reinforcing ribs 32 include a top reinforcing rib 321, middle reinforcing ribs 322, and a bottom reinforcing rib 323. The end plate 30 is provided with a guide passage 35, the guide passage 35 includes a vertical passage 351 and a horizontal passage 352, the vertical passage 351 penetrates the top reinforcing rib 321 and the middle reinforcing ribs 322 in the vertical direction, the horizontal passage 352 is formed between any two first reinforcing ribs 32 between the top reinforcing rib 321 and the bottom reinforcing rib 323, an upper end of the vertical passage 351 is in communication with the exhaust gap 2111, and the horizontal passage 352 is in communication with the vertical passage 351 and the exhaust port 212.

According to some embodiments of the present application, the present application further provides a power consumption apparatus, including the battery 100 according to any of the foregoing solutions, where the battery 100 is used for providing electrical energy to the power consumption apparatus.

The power consumption apparatus may be any of the foregoing devices or systems that use the battery 100.

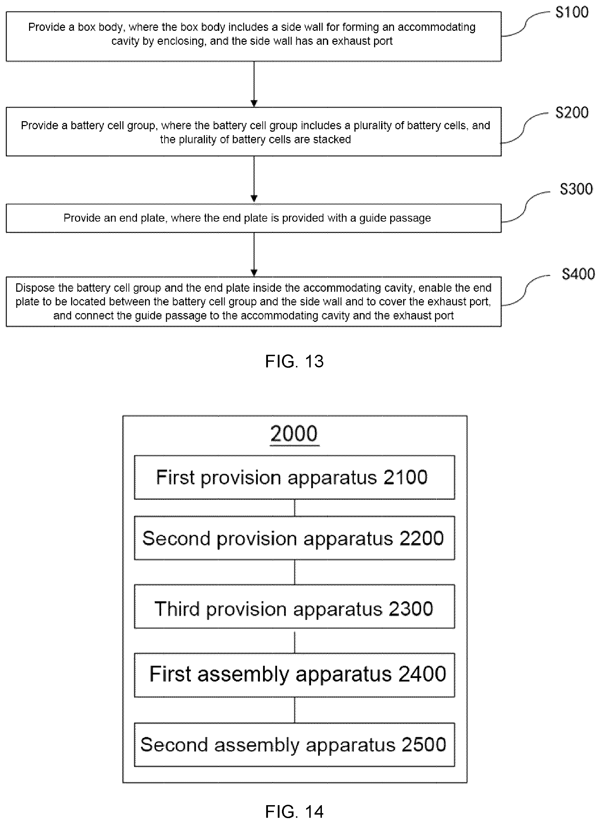

An embodiment of the present application further provides a manufacturing method for a battery 100. Referring to FIG. 13, FIG. 13 is a flowchart of a manufacturing method for a battery 100 according to some embodiments of the present application. The manufacturing method includes:
S100: providing a box body 20, where the box body 20 includes a side wall 21 for forming an accommodating cavity 211 by enclosing, and the side wall 21 has an exhaust port 212;
S200: providing a battery cell group 10, where the battery cell group 10 includes a plurality of battery cells 11, and the plurality of battery cells 11 are stacked;
S300: providing an end plate 30, where the end plate 30 is provided with a guide passage 35; and
S400: disposing the battery cell group 10 and the end plate 30 inside the accommodating cavity 211, so as to enable the end plate 30 to be located between the battery cell group 10 and the side wall 21 and to cover the exhaust port 212, and connect the guide passage 35 to the accommodating cavity 211 and the exhaust port 212.

It should be noted that relevant structures of the battery 100 manufactured by the manufacturing method provided in the foregoing embodiment may be referenced to the battery 100 provided in each foregoing embodiment, and will not be repeated here.

An embodiment of the present application further provides a manufacturing device 2000 for a battery 100. Referring to FIG. 14, FIG. 14 is a schematic block diagram of a manufacturing device 2000 for a battery 100 according to some embodiments of the present application. The manufacturing device 2000 includes a provision module and an assembly module, where the provision module may include a first provision apparatus 2100, a second provision apparatus 2200, and a third provision apparatus 2300; and the assembly module may include a first assembly apparatus 2400 and a second assembly apparatus 2500.

The first provision apparatus 2100 is configured to provide a box body 20, where the box body 20 includes a side wall 21 for forming an accommodating cavity 211 by enclosing, and the side wall 21 has an exhaust port 212. The second provision apparatus 2200 is configured to provide a battery cell group 10, where the battery cell group 10 includes a plurality of battery cells 11, and the plurality of battery cells 11 are stacked. The third provision apparatus 2300 is configured to provide an end plate 30, where the end plate 30 is provided with a guide passage 35. The first assembly apparatus 2400 is configured to dispose the battery cell group 10 inside the accommodating cavity 211, and the second assembly apparatus 2500 is configured to dispose the end plate 30 inside the accommodating cavity 211 and between the battery cell group 10 and the side wall 21, enable the end plate 30 to cover the exhaust port 212, and connect the guide passage 35 to the accommodating cavity 211 and the exhaust port 212.

It should be noted that relevant structures of the battery 100 manufactured by the manufacturing device 2000 provided in the foregoing embodiment may be referenced to the battery 100 provided in each foregoing embodiment, and will not be repeated here.

It should be noted that the features in the embodiments of the present application may be combined with each other on a non-conflict basis.

Although the present application is described with reference to preferred embodiments, various improvements may be made and components may be replaced with equivalents without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A battery, comprising:
a box body, comprising a side wall for forming an accommodating cavity by enclosing, wherein the side wall has an exhaust port;
a battery cell group, disposed inside the accommodating cavity and comprising a plurality of battery cells, wherein the plurality of battery cells are stacked; and
an end plate, disposed inside the accommodating cavity and located between the battery cell group and the side wall, wherein the end plate covers the exhaust port, the end plate is provided with a guide passage, and the guide passage is configured for comminicating the accommodating cavity with the exhaust port.

2. The battery according to claim 1, wherein the box body further comprises a top wall, the side wall is disposed at a periphery of the top wall, the battery cell group is located below the top wall, an exhaust gap is provided between the top wall and the battery cell group, and the guide passage is configured for communicating the exhaust gap with the exhaust port.

3. The battery according to claim 1 or 2, wherein in a thickness direction of the end plate, the guide passage is directly opposite to the exhaust port or the guide passage and a projection of the exhaust port overlap at least partially.

4. The battery according to claim 3, wherein the guide passage comprises a vertical passage and a horizontal passage, an upper end of the vertical passage is in communication with the accommodating cavity, one end of the horizontal passage in the thickness direction is in communication with the vertical passage, and the other end is in communication with the exhaust port.

5. The battery according to claim 4, wherein the vertical passage does not penetrate the end plate in a vertical direction.

6. The battery according to claim 5, wherein the end plate comprises:
an end plate body, having a first surface facing the battery cell group and a second surface facing away from the battery cell group, wherein the first surface abuts against the battery cell group; and
a plurality of first reinforcing ribs, formed on the second surface and abutting against the side wall, wherein the plurality of first reinforcing ribs are spaced in the vertical direction, wherein
the plurality of first reinforcing ribs comprise a top reinforcing rib, middle reinforcing ribs, and a bottom reinforcing rib, the vertical passage penetrates at least the top reinforcing rib, and the horizontal passage is formed between two adjacent first reinforcing ribs.

7. The battery according to claim 6, wherein the top reinforcing rib is provided with a first opening, each of the middle reinforcing ribs is provided with a second opening, the first opening is in communication with the second opening to form the vertical passage, and an area of the first opening is greater than that of the second opening.

8. The battery according to claim 6 or 7, wherein the top reinforcing rib is further provided with a clamping portion for mating with a clamping mechanism for the end plate.

9. The battery according to any one of claims 6-8, wherein the end plate further comprises:
a plurality of second reinforcing ribs, formed on the second surface and abutting against the side wall, wherein the plurality of second reinforcing ribs intersect the plurality of first reinforcing ribs, and each of the second reinforcing ribs extends in the vertical direction.

10. The battery according to claim 9, wherein the vertical passage is located between two adjacent second reinforcing ribs.

11. The battery according to any one of claims 1-10, wherein the battery further comprises:
a pressure relief mechanism, disposed on the side wall, wherein one end of the pressure relief mechanism is in communication with the exhaust port, and the pressure relief mechanism is configured to release an internal pressure when the internal pressure of the battery reaches a threshold.

12. A power consumption apparatus, comprising the battery according to any one of claims 1-11, wherein the battery is configured for providing electrical energy.

13. A battery manufacturing method, comprising:
providing a box body, wherein the box body comprises a side wall for forming an accommodating cavity by enclosing, and the side wall has an exhaust port;
providing a battery cell group, wherein the battery cell group comprises a plurality of battery cells, and the plurality of battery cells are stacked;
providing an end plate, wherein the end plate is provided with a guide passage; and
disposing the battery cell group and the end plate inside the accommodating cavity, enabling the end plate to be located between the battery cell group and the side wall and to cover the exhaust port, and communicating the guide passage with the accommodating cavity and the exhaust port.

14. A battery manufacturing device, comprising:
a provision module, configured to provide a box body, a battery cell group, and an end plate, wherein the box body comprises a side wall for forming an accommodating cavity by enclosing, the side wall has an exhaust port, the battery cell group comprises a plurality of battery cells, the plurality of battery cells are stacked, and the end plate is provided with a guide passage; and
an assembly module, configured to dispose the battery cell group and the end plate inside the accommodating cavity, enable the end plate to be located between the battery cell group and the side wall and to cover the exhaust port, and communicate the guide passage with the accommodating cavity and the exhaust port.
